Europäisches Patentamt

European Patent Office

Office européen des brevets

(19)

(11) Numéro de publication: **0 086 716**
**A2**

(12) # DEMANDE DE BREVET EUROPEEN

(21) Numéro de dépôt: **83400291.7**

(22) Date de dépôt: **11.02.83**

(51) Int. Cl.³: **C 03 C 19/00,** E 06 B 3/66

(30) Priorité: **15.02.82 DE 3205351**

(71) Demandeur: **SAINT-GOBAIN VITRAGE, Les Miroirs 18, avenue d'Alsace, F-92400 Courbevoie (FR)**

(43) Date de publication de la demande: **24.08.83 Bulletin 83/34**

(72) Inventeur: **Termath, Günter, Pannhütte 58, D-4650 Gelsenkirchen-Buer (DE)**
Inventeur: **Simsch, Manfred, Oberbilker Allee 111, D-4000 Duesseldorf (DE)**

(84) Etats contractants désignés: **AT BE CH DE FR IT LI NL SE**

(74) Mandataire: **Leconte, Jean-Gérard et al, Saint-Gobain Recherche 39, Quai Lucien Lefranc, F-93304 Aubervilliers Cedex (FR)**

(54) Fabrication de vitrages multiples à l'aide de feuilles de verre pourvues d'un revêtement métallique.

(57) L'invention concerne l'industrie du verre et plus particulièrement du verre portant un revêtement réfléchissant en plusieurs couches, une couche métallique étant en contact au moins sur un côté avec une couche d'oxyde métallique ou de semi-conducteur.

L'invention propose d'éliminer, notamment dans la région des bords des feuilles de verre, au moins les couches supérieures du revêtement, sans attaquer le verre, à savoir les éventuelles couches qui recouvrent la couche métallique et la couche métallique elle-même, y compris l'interface entre cette même couche métallique et la couche d'oxyde immédiatement sous-jacente.

L'invention s'applique notamment à la fabrication de vitrages isolants multiples constitués de une ou plusieurs feuilles de verre revêtues.

ACTORUM AG

FABRICATION DE VITRAGES MULTIPLES

A L'AIDE DE FEUILLES DE VERRE POURVUES D'UN REVETEMENT METALLIQUE

La présente invention concerne la fabrication d'un vitrage multiple isolant constitué d'une pluralité de feuilles de verre, espacées deux à deux par un cadre d'entretoisement et assemblées par collage, une au moins de ces feuilles ayant sur sa face tournée vers l'intérieur du vitrage, un revêtement réfléchissant en une ou plusieurs couches.

Ce revêtement peut comporter au moins une couche en un métal tel que l'or, l'argent, le cuivre, en contact au moins d'un côté avec une autre couche d'un oxyde métallique ou semi-conducteur tel que l'oxyde de zinc, l'oxyde d'indium, l'oxyde d'étain, l'oxyde de titane, ou un mélange de ces oxydes, notamment en vue de réfléchir le rayonnement calorifique ou lumineux.

Pour assembler de tels vitrages multiples, il est avantageux que la surface du verre ne présente aucun revêtement dans la zone des bords utilisés pour le collage.

A cet effet, il est connu et courant, de découper tout d'abord la feuille de verre aux dimensions voulues, de masquer la zone de ses bords, par exemple par du ruban adhésif, puis de procéder à l'application du revêtement. Après enlèvement du ruban adhésif, la feuille de verre revêtue sur sa surface, mais pas sur ses bords, est réunie à une autre feuille de verre par un collage portant sur la zone des bords non revêtue. Cette pratique suppose que les feuilles de verre soient découpées aux dimensions finales avant revêtement, puis traitées séparément, ce qui est coûteux.

Si au contraire on part de feuilles de verre entièrement revêtues, il est également connu avant l'assemblage en vitrage multiple,
d'éliminer le revêtement, mais pour cela il faut avoir pris la précaution de l'appliquer sur une couche qui puisse être facilement détruite
ou décomposée par une flamme réductrice (DE-OS 28 54 213).

Les produits de décomposition dus à l'action de la flamme
peuvent ensuite être raclés ou brossés. Ce procédé connu ne peut toutefois être utilisé que pour des oxydes métalliques facilement réductibles, comme en particulier l'oxyde de bismuth. Dans le cas d'autres
couches d'oxydes métalliques ou semi-conducteurs, tels que ceux fréquemment utilisés pour former une couche d'ancrage entre le verre et le
revêtement réfléchissant, comme par exemple l'oxyde de zinc, l'oxyde
d'indium, l'oxyde d'étain, l'oxyde de titane ou un mélange de ces oxydes, il n'est pas possible de procéder à une telle élimination car ces
couches présentent une stabilité thermique élevée et ne peuvent pas
être détruites par cette seule action.

La présente invention vise à permettre l'élimination de revêtements de n'importe quelle structure ou composition, sur les bords
d'une feuille de verre, en vue de leur assemblage ultérieur en double
vitrage, notamment par collage.

Grâce à l'invention, on obtient cette élimination par voie
mécanique. On peut ainsi enlever non seulement la couche métallique,
mais également, si on le désire, la ou les sous couche(s), y compris la
sous-couche d'oxyde la plus proche du verre, sans toutefois attaquer la
surface du verre.

Cependant, grâce à ce procédé de l'invention, la ou les sous-
couche(s) d'oxyde servant notamment de couche(s) d'ancrage ou de liaison, disposée(s) entre le verre et le revêtement métallique n'est (ou
ne sont pas) nécessairement éliminée(s), contrairement à ce qui se passe dans le procédé antérieur connu, décrit précédemment.

La sous-couche d'oxyde en contact direct avec le verre adhère
fortement au verre, si bien que son maintien en place ne nuit pas au
bon collage et à la bonne étanchéité du vitrage multiple.

Par contre, les liaisons entre la couche métallique et les
couches d'oxydes avoisinantes sont beaucoup moins fortes, elles sont
notamment bien inférieures aux liaisons entre une couche d'oxyde et le
verre, ou entre deux couches d'oxyde.

Ainsi, lorsque pour obtenir un bon collage lors de la fabrication d'un vitrage multiple on élimine le revêtement du verre, on a atteint le but fixé dès que l'on a enlevé les couches qui recouvrent la couche métallique et la couche métallique elle-même y compris l'interface entre cette couche métallique et la couche d'oxyde sous-jacente.

On pourrait s'attendre à ce que l'élimination mécanique des couches de revêtement dures en oxyde ne puisse s'effectuer qu'à l'aide de moyens de meulage d'une dureté au moins égale à celle des couches de revêtement. L'utilisation de tels moyens de meulage durs aurait inévitablement pour effet d'abîmer la surface polie des feuilles de verre et de nuire ainsi considérablement à la qualité de l'étanchéité des vitrages multiples parce que des chemins de diffusion de la vapeur d'eau seraient créés sur les bords des feuilles de verre.

Or, on a constaté de manière étonnante, que lorsqu'il s'agit d'éliminer un revêtement à plusieurs couches sur du verre, dans lequel en dessous d'une couche très dure d'oxyde métallique, se trouve une couche relativement tendre d'un métal pur, la couche dure et la couche tendre peuvent être éliminées mécaniquement à l'aide d'un moyen de polissage très tendre, même lorsque la dureté du moyen de polissage utilisé est nettement inférieure à celle de la couche à éliminer. Il semble que l'efficacité constatée soit basée sur le fait que, lorsque la couche dure supérieure est sollicitée mécaniquement, la couche de métal tendre sous-jacente cède localement et la couche dure supérieure se fragmente alors et peut de cette façon être éliminée sous la forme d'écailles. Dans cette façon de pratiquer la pression et l'effet de frottement du moyen de meulage jouent un rôle essentiel dans l'élimination rapide et complète des couches. La chaleur produite lors du travail de meulage ou polissage, qui dans certains cas peut mener à un échauffement local très important des couches, peut aussi avoir une influence essentielle car on peut imaginer que localement, l'échauffement du revêtement est si important, qu'il en résulte une détérioration thermique des couches pouvant de son côté mener à nouveau à un affaiblissement de la jonction intercouche.

Pour mettre en pratique l'invention, des meules faites de bandes de tissu revêtu de grains de liège se sont révélées particulièrement satisfaisantes. En lieu et place des grains de liège, on peut aussi utiliser des grains fins en caoutchouc naturel ou en un caoutchouc synthétique, comme du Néoprène, qui est appliqué aussi à l'aide d'un liant adéquat en résine synthétique sur un substrat en tissu textile.

Un exemple de mise en oeuvre du procédé selon l'invention sera décrit plus en détail ci-après.

Dans l'exemple proposé, on désire fabriquer un vitrage isolant double à partir d'une première feuille de verre fabriquée par le procédé "float", non revêtue et d'une seconde feuille de verre "float" pourvue sur une face d'un revêtement réfléchissant à plusieurs couches appliquées sous vide, le revêtement réfléchissant à plusieurs couches étant tourné vers l'espace d'air intermédiaire enfermé dans le double vitrage.

Le revêtement réfléchissant à plusieurs couches se compose d'une couche mixte d'oxyde d'indium et d'oxyde d'étain appliquée directement sur la surface du verre, le rapport $In_2O_3:SnO_2$ étant de 9:1, d'une couche d'argent métallique appliquée sur cette couche "d'adhérence" et d'une couche de recouvrement appliquée sur cette couche d'argent et faite d'un mélange d'oxyde d'indium et d'oxyde de zinc également selon un rapport de 90 % de $In_2O_3$ et de 10 % de $SnO_2$.

Les feuilles de verre pourvues du revêtement réfléchissant reçoivent la succession de couches précédemment décrites sur toute l'étendue de leur surface dans des installations d'évaporation sous vide. Les couches peuvent aussi être appliquées non pas par évaporation sous vide, mais selon le procédé de pulvérisation cathodique décrit, par exemple, dans le document DE-OS 2 750 500. Les grandes feuilles de verre ainsi revêtues sont ensuite découpées aux dimensions exigées pour leur utilisation à la fabrication du vitrage isolant.

Après la découpe, le revêtement à plusieurs couches est éliminé par voie mécanique du bord de cette feuille de verre, sur tout son pourtour et sur une largeur d'environ 20 mm. A cet effet, on fait passer sur la zone marginale de la feuille de verre une polisseuse à bande pourvue d'une bande à polir revêtue de liège. La vitesse de la bande est de 15 à 30 mètres par seconde. Comme bande à polir, on peut par exemple utiliser une bande de tissu revêtu de grains de liège et en particulier la bande de tissu à polir FLEXBAC-KORL KLX 890 liée par une résine artificielle de la Société CARBORUNDUM. Après cette opération de polissage, les couches supérieures, y compris la couche d'argent, sont complètement éliminées. Par contre, la surface du verre n'a pas subi le moindre dommage.

La feuille de verre revêtue ainsi préparée, est utilisée de la manière habituelle pour fabriquer le vitrage isolant.

- 5 -

Pour cela, on commence par préparer un cadre d'espacement des feuilles de verre, on l'enduit sur deux de ses côtés à l'aide d'un mastic d'étanchéité du type caoutchouc Butyl. Ensuite, on plaque une feuille de verre sur chaque côté du cadre d'espacement, on presse, et on remplit la gorge formée à l'extérieur du cadre d'espacement, sur toute la périphérie du vitrage, à l'aide d'un matériau qui assure l'étanchéité et le collage des feuilles de verre, ce matériau étant par exemple un polysulfure du type "THIOKOL" apte à polymériser pour donner une matière plastique restant élastique.

Le procédé d'abrasion du revêtement déposé sur des feuilles de verre peut également s'appliquer vis à vis de revêtements obtenus autrement que par évaporation sous vide ou pulvérisation cathodique, par exemple par pulvérisation de solution, par exposition du verre à des vapeurs (C.V.D), par dépôt de poudres.

L'enlèvement du revêtement réfléchissant le rayonnement calorifique et/ou lumineux est pratiquement nécessaire pour la fabrication de vitrages multiples, mais il pourra également être pratiqué avec le même procédé pour des applications autres que la fabrication de vitrages multiples, dans la région des bords ou dans d'autre régions.

- 1 -

## REVENDICATIONS

1. Procédé d'enlèvement de tout ou partie d'un revêtement en plusieurs couches déposé sur une feuille de verre, en particulier pour réfléchir les rayons calorifiques et/ou lumineux, revêtement dans lequel au moins une couche en un métal tel que de l'or, de l'argent ou du cuivre est en contact au moins d'un côté avec une couche d'un oxyde métallique ou semi-conducteur tel qu'en particulier de l'oxyde de zinc, d'indium, d'étain, de titane ou un mélange de ces oxydes, caractérisé en ce qu'on élimine par voie mécanique, au moins les couches supérieures du revêtement, à savoir les éventuelles couches supérieures du revêtement qui recouvrent la couche de métal, et la couche de métal elle-même, y compris l'interface entre cette même couche de métal et la couche d'oxyde métallique immédiatement sous-jacente, sans attaquer la surface polie de la feuille de verre.

2. Procédé suivant la revendication 1, caractérisé en ce que l'élimination mécanique s'effectue à l'aide d'outils polisseurs ou de moyens à polir tendres comparés à la dureté du verre silicaté ou à la dureté des couches d'oxyde métallique ou d'oxyde semi-conducteur.

3. Procédé suivant les revendications 1 et 2, caractérisé en ce que l'élimination des couches est effectuée à l'aide de bandes à polir revêtues de grains de liège ou de caoutchouc liés au moyen d'une résine synthétique.

4. Procédé suivant la revendication 3, caractérisé en ce que les bandes à polir travaillent à une vitesse de 15 à 30 mètres par seconde sur les couches à enlever.

5. Application du procédé suivant les revendications 1 à 4 précédentes à l'enlèvement du revêtement sur les bords de feuilles de verre destinées à entrer dans la composition d'un vitrage multiple, la face revêtue étant orientée vers l'intérieur du vitrage.